Europäisches Patentamt

European Patent Office

Office européen des brevets

(19)

(11) Numéro de publication: **0 104 294**

**B1**

---

(12) **FASCICULE DE BREVET EUROPÉEN**

(45) Date de publication du fascicule du brevet:
18.03.87

(51) Int. Cl.⁴: **H 04 L 5/22,** H 04 L 25/36

(21) Numéro de dépôt: **82430029.7**

(22) Date de dépôt: **28.09.82**

---

(54) Système de transmission de données.

---

(43) Date de publication de la demande:
**04.04.84 Bulletin 84/14**

(45) Mention de la délivrance du brevet:
**18.03.87 Bulletin 87/12**

(84) Etats contractants désignés:
**DE FR GB**

(56) Documents cité:
DE-A-3 006 110
FR-A-1 492 035
GB-A-2 005 965
US-A-3 310 626
US-A-3 575 557
US-A-3 961 138
US-A-4 187 394

IBM TECHNICAL DISCLOSURE BULLETIN, vol. 18,
no. 1, juin 1975, pages 211-212, New York USA; R. A.
DONNAN: "Code independent message framing
format"
COMPUTER DESIGN, vol. 14, no. 3, mars 1975,
pages 81-87, Concord USA; S. B. COOPER:
"Hardware considerations for high level data link
control communications"
ELECTRICAL COMMUNICATION, vol. 52, no. 1,
janvier 1977, pages 74-79, New York USA; H. CH.
DINGLINGER: "Digital multiplex signals for data
transmission"

(73) Titulaire: **International Business Machines
Corporation, Old Orchard Road, Armonk, N.Y.
10504 (US)**
(84) Etats contractants désignés: **DE GB**

(73) Titulaire: **Compagnie IBM FRANCE, 5 Place
Vendôme, F-75000 Paris 1er (FR)**
(84) Etats contractants désignés: **FR**

(72) Inventeur: **Epenoy, Gabriel, 734, Chemin des
Salles, F-06140 Vence (FR)**
Inventeur: **Kuhne, Roland, Voie Pénétrante, F-06480
La Colle- s-Loup (FR)**

(74) Mandataire: **Tubiana, Max, Compagnie IBM France
Département de Propriété Industrielle, F-06610 La
Gaude (FR)**

---

Il est rappelé que: Dans un délai de neuf mois à compter de la date de publication de la mention de la délivrance du brevet européen
toute personne peut faire opposition au brevet européen délivré, auprès de l'Office européen des brevets. L'opposition doit être
formée par écrit et motivée. Elle n'est réputée formée qu'après paiement de la taxe d'opposition (Art. 99(1) Convention sur le brevet
européen).

EP 0 104 294 B1

## Description

La présente invention a pour objet un dispositif de transmission des données provenant d'un ensemble de sources à basse vitesse sur un canal haute vitesse. Elle s'applique plus particulièrement au domaine des modems (modulateur-démodulateur).

Les caractéristiques dites de bande-passante des canaux de transmission, et notamment des lignes téléphoniques ne permettent pas la transmission de données numériques sans que celles-çi soient au préalable soumises à un traitement dit de modulation. En corollaire, à la réception il faut procéder.à une opération dite de démodulation afin de retrouver les données numériques d'origine. A chacune des extrémités du canal de transmission, on disposera d'un dispositif dit modem incorporant les moyens permettant de réaliser l'une et l'autre des fonctions mentionnées ci-dessus à savoir la modulation et la démodulation.

D'autre part, le coût des matériels de transmission est tel, que l'on cherche à transmettre à des vitesses (nombre d'éléments binaires ou bits par seconde) aussi élevées que possible pour amortir ces matériels. Or certaines sources fournissent des données à des taux relativement faibles. D'où l'intérêt de moyens permettant de concentrer ou multiplexer sur un même modem, les données provenant de (ou destinées à) plusieurs sources. On utilise à cet effet, un multiplexeur démultiplexeur chargé de gérer les bits de données entre les sources et le modem. On parle alors de modem multiplexé. En fait, cette notion recouvre l'association d'un multiplexeur à un modem classique non multiplexé, ce qui en fin de compte augmente le coût du système de transmission ainsi réalisé. On notera, qu'en pratique on utilise souvent le terme de modem multiplexé ou simplement de modem pour désigner l'ensemble modem et multiplexeur/démultiplexeur. C'est ce que l'on fera ici.

Les techniques dites de modulation à double bandes latérales, porteuses en quadrature (DSB-QC) se prêtent particulièrement bien à la résolution des problèmes évoqués plus haut. Ces techniques utilisent la modulation en amplitude de deux porteuses en quadrature de phases l'une par rapport à l'autre. A chaque combinaison d'un groupe de bits à transmettre, on associe un symbole représentant un point du plan complexe défini à l'aide d'axes orthonormés représentant les porteuses en quadrature.

Ainsi, un modem transmettant à 9600 bits par seconde (bps) ou 2400 bauds groupera les bits des terminaux (sources) qui sont rattachés au modem, par groupes de quatre bits dits quadbits. Chaque quadbit définit un symbole auquel correspond une combinaison des porteuses en quadrature. Les symboles sont soumis au modulateur à des instants dits de signalisation se présentant à intervalle régulier. La distance temporelle entre deux instants de signalisation définit un temps dit temps baud. Ainsi, pour une vitesse de 9600 bps et un groupage des bits en quadbits, le modulateur est utilisé au rythme de 9600/4 = 2400 bauds.

Le mode de groupage des bits en quadbits peut être plus ou moins rigide. Ainsi, pour quatre sources A, B, C, D rattachées au modem à 9600 bps, la construction des quadbits peut se faire selon le tableau I ci-dessous:

**Tableau I**

| Débit Global (bps) | Canal Actif (sources) | Débit du Canal Actif (bps) | Affectation | | | |
|---|---|---|---|---|---|---|
| | | | Q1 | Q2 | Q3 | Q4 |
| 9600 | A | 9600 | X | X | X | X |
| | A | 4800 | X | | X | |
| | B | 4800 | | X | | X |
| | A | 4800 | X | | X | |
| | B | 2400 | | X | | |
| | C | 2400 | | | | X |
| | A | 2400 | X | | | |
| | B | 2400 | | X | | |
| | C | 2400 | | | X | |
| | D | 2400 | | | | X |

Pour plus d'explications sur le tableau I, on pourra se reporter notamment à la demande de brevet européen No. 81430012.5, déposée par la demanderesse le 30 avril 1981 sous le titre: "Procédé de détermination de la configuration des canaux actifs dans un système de communication multiplex et dispositif de mise en oeuvre dudit procédé". On remarque que l'on peut au maximum desservir quatre canaux. Si l'on veut relier l'un des canaux, à travers des sous-canaux, à des terminaux travaillant à une cadence de 1200 bps, il faut rajouter un dispositif logique supplémentaire chargé d'orienter les bits vers leurs sous-canaux destinataires ou de les prélever à partir de ceux-ci. Cette opération est moins simple qu'elle ne parait au premier abord. En effet, si l'on utilisait un multiplexage/démultiplexage de type classique, on risquerait une erreur d'orientation car il n'y aurait alors aucune référence d'origine déterminant le premier terminal à desservir. On a alors pensé à utiliser des dispositifs organisant l'orientation des bits vers les terminaux à 1208 bps en fonction du contenu du train de bits sur le canal desservant les deux sous-canaux correspondants. Ces dispositifs d'orientation des bits de type dit stochastique ont été décrits notamment dans le brevet français No. 73 35909, publié sous le No. 2 246 211. On remarque que pour assurer une distribution de bits équivalente sur chacun des sous-canaux, on utilise à l'émission des brouilleurs (scramblers). A la réception, chaque sous-canal reçoit les données à un taux moyen proche de 1200 bps sur un intervalle de temps suffisamment long. En fait, les bits sont fournis sur chaque sous-canal par paquets apparaissant à un taux instantané de 2400 bps.

Les dispositifs dits stochastiques, bien que représentant quelques avantages, se prêtent mal à une utilisation dans un système comprenant des contrôleurs de communications, lesquels balayent les lignes (ou sous-canaux) de manière cyclique et régulière.

Il est bon alors que la vitesse instatanée de circulation des bits sur les sous-canaux soit régulière et aussi proche que possible de la cadence nominale du terminal rattaché à chaque sous-canal.

Des moyens pour réaliser cette fonction ont déjà été prévu dans l'art antérieur et notamment dans l'art antérieur et notamment dans les brevets US-A-3 575 557 et GB-A-2005 965.

Dans le premier de ces documents, plusieurs sources de données travaillant à des vitesses différentes sont multiplexées sur un même canal de transmission, caractère par caractère, sous la commande d'une horloge appartenant au système de multiplexage. Bien que la sortie du multiplexeur puisse alimenter un modem, aucune intéraction permettant les synchronisations de l'ensemble incluant le modem n'a été prévue.

La présente invention a pour objet un dispositif permettant de rattacher des terminaux à un modem, notamment à un modem non multiplexé, et de desservir lesdits terminaux à une cadence proche de leur cadence nominale.

Plus précisément, les terminaux sont commandés par des moyens dits d'horloge travaillant à une cadence proche de leur cadence nominale. Le groupe de bits recueillis à partir des terminaux au cours de chaque cycle d'horloge est sérialisé vers un modem après que des éléments binaires (bits) dits de mise en format y aient été rajoutés. Le train de bits soumis au modem, peut être à la vitesse nominale du canal de transmission dudit modem, auquel cas le groupage des bits en vue de la détermination des symboles se fait par simple découpage séquentiel dudit train de bits.

D'autres objets, caractéristiques et avantages de la présente invention ressortiront mieux de l'exposé qui suit, fait en référence aux dessins annexés à ce texte, qui représentent un mode de réalisation préféré de celle-ci.

La figure 1 représente un mode de réalisation de l'invention.

La figure 2 représente un mode de réalisation du circuit 28. de la figure 1

La figure 3 représente un schéma de principe du circuit 34.

La figure 4 représente un diagramme de fonctionnement des dispositifs d'émission de la figure 1.

La figure 5 représente un schéma de principe du circuit 42.

La figure 6 représente un schéma du registre à décalage (SHR) 44 et des opérations logiques qui lui sont associées.

Les figures 7 et 8 représentent un mode de réalisation de circuits de l'ensemble 40 du récepteur de la figure 1.

La figure 9 représente un diagramme de fonctionnement des dispositifs de réception de la figure 1.

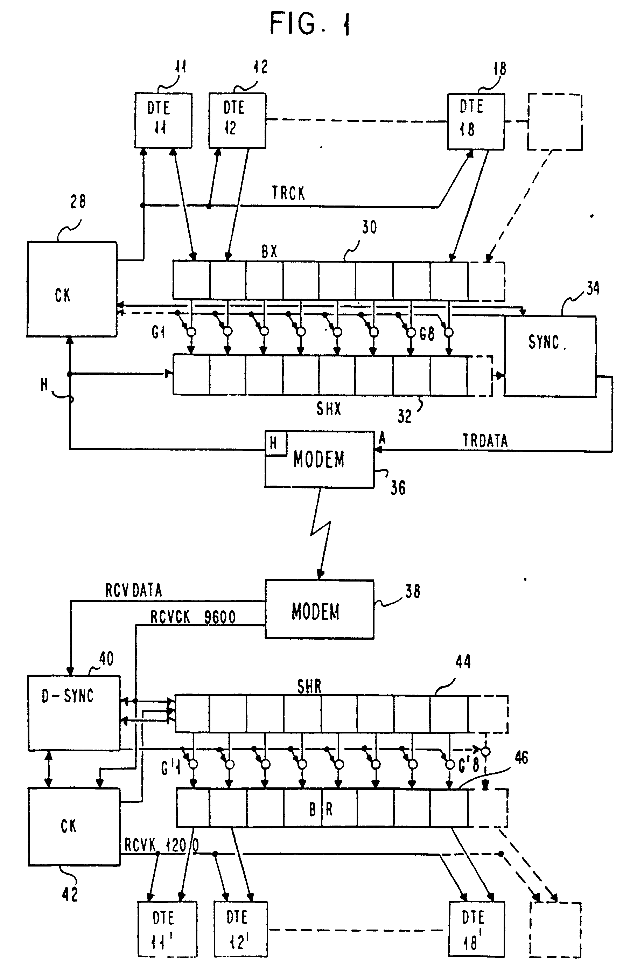

On a représenté sur la figure 1 le schéma de principe d'un mode de réalisation de l'invention. Les terminaux (DTE) portant les références 11, 12, 13, ..., 18 sont équipés pour travailler à une cadence nominale de 1200 bps environ. Chacun desdits terminaux fournit un bit de données sur commande d'une horloge 28 (moyens horloge CK) fournissant aux terminaux un signal dit d'horloge externe d'émission. Ce bit est stocké dans un registre tampon d'émission (BX) 30. Chaque position de bit du registre tampon est reliée à une position de bit d'un registre à décalage d'émission (SHX) 32 à travers une porte G1 à G8, ledit registrer 32 servant à sérialiser les bits du registre tampon. L'ouverture des portes G1 à G8 permet de transférer le contenu du registre tampon 30 dans le registre à décalage 32. La sortie série du registre 32 passe par un circuit logique de mise en format émission (SYNC) 34. Ce circuit logique organise la mise en format du train de bits reçu du registre à décalage 32 en vue d'une transmission synchrone, de type HDLC par exemple. Le train de bits à transmettre ainsi mis en format et désigné ici par TRDATA, attaque l'entrée A de l'émetteur 36 du modem qui peut être notamment un modem du genre IBM 3865 dépourvu de son multiplexeur ou un autre modem non multiplexé du commerce de caractéristiques semblables. L'horloge interne d'émission (H) du modem 36 sert à la fois à synchroniser l'horloge 28 et à commander les décalages du contenu du registre à décalage 32.

On notera que bien que le nombre de terminaux ait été ici fixé à huit, cela n'est nullement impératif. On comprendra, grâce à la description du fonctionnement qui suivra, que ce nombre peut être inferieur ou

3

supérieur à huit (voir partie en pointillés sur le schéma de la figure 1).

D'autre part, on notera aussi que l'on a choisi ici d'attaquer un modem à 9600 bps sur son entrée à 9600 bps. Là encore, on comprendra qu'il n'y a rien d'impératif. Le choix de la vitesse de fonctionnement du modem dépend du nombre de terminaux à desservir, et de leurs caractéristiques. On peut même utiliser l'invention sur plusieurs canaux d'un modem multiplexé du genre IBM 3865.

De même qu'à l'émission, les symboles dérivés des quadbits ont été émis à des instants de signalisation bien définis dans le temps, de même l'onde reçue par le modem 38 n'est porteuse d'information de données (symboles) qu'à des instants bien précis.

Pour récupérer ces données, le signal reçu doit être échantillonné aux bons moments, c'est-à-dire non seulement au même rythme que celui utilisé à l'émission, mais en outre en phase avec celui-ci.

Dans les systèmes de transmission modernes, l'onde reçue contient à la fois les données et l'information dite d'horloge. De nombreux systèmes de réception et dispositifs de récupération de l'information d'horloge ont été décrits dans l'art antérieur. On citera à titre d'exemple le brevet Français No. 7514020 publié sous le No. 2309 089 et intitulé: "Procédé pour synchroniser l'horloge du récepteur d'un système de transmission de données et dispositif pour mettre en oeuvre le procédé". On pourrait aussi se reporter à la demande de brevet européen No. 0 017 716.

Les détails de fonctionnement du récepteur modem peuvent donc être retrouvés dans les documents cités plus haut. On notera pour la présente invention, que le récepteur de modem 38 fournit d'une part un train de bits de données reçues à 9600 bps (RCVDATA) et d'autre part un signal dit d'horloge interne de réception (RCVCK 9600). En principe, les bits du train RCVDATA sont identiques à ceux issus du circuit logique SYNC 34 Le train de bits RCVDATA est appliqué à un circuit logique de remise en format (D-SYNC) 40. L'information RCVCK est envoyée vers un circuit d'horloge (CK) 42 qui engendre un signal dit d'horloge externe de réception à 1200 cycles par seconde. Le signal d'horloge interne de réception sert aussi à commander les décalages d'un registre de désérialisation de réception (SHR) 44 chargé par les bits de données extraits du train de bit RCVDATA à travers le circuit logique de remise en format 40. L'horloge 42 sert en outre à commander, à travers le circuit logique 40, le transfert du contenu du registre à décalage 44 dans un registre tampon de réception (BR) 46. Ce transfert se fait à travers des portes G'1 à G'8. Les positions de bits du registre tampon 46 sont respectivement reliées à des terminaux (DTE) destinataires portant une référence 11' à 18'. Les transferts de bits entre le registre tampon 46 et les terminaux 11' à 18' sont commandés par le signal RCVK 1200 d'horloge externe de réception 42.

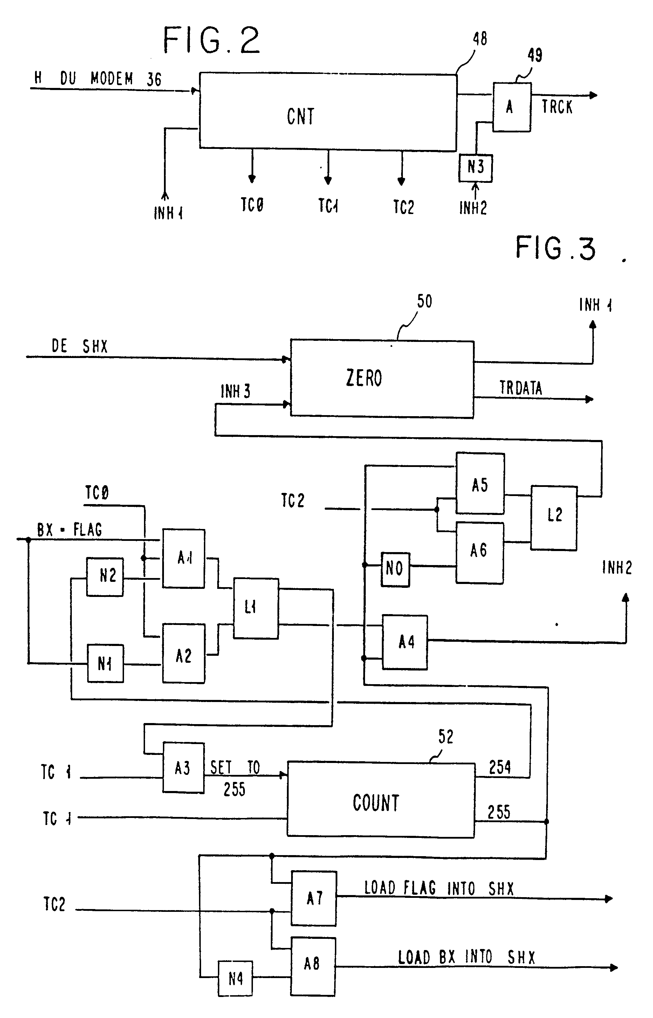

La figure 2 représente un mode de réalisation de l'horloge 28 comprenant un compteur binaire 48 (CNT) à trois étages, associé à une porte ET (A) 49. Le compteur est commandé par le signal horloge H fourni par le modem 36. Ce signal a une périodicité de 1/9600 secondes. L'incrémentation du compteur 48 peut être inhibée pour un cycle par le circuit logique 34. C'est le rôle de l'entrée INH1 dont on verra l'utilité plus loin. Enfin, le signal issu du troisième étage du compteur 48 constitue l'information TRCK. Ainsi, lorsque le contenu du compteur 48 passe de la valeur décimale 7 à zéro, chaque terminal (DTE) 11 à 18 transmet un bit de données dans une position du registre tampon 30.

Les sorties TC0, TC1 et TC2 résultant du décodage des états 0,1 et 2 du compteur 48 sont destinées au circuit logique (SYNC) 34. Enfin, après inversion en N3, un signal d'inhibition d'horloge désigné par INH2 commande l'ouverture de la porte 49.

On a représenté sur la figure 3 un mode de réalisation du circuit logique 34. On notera que ce circuit est notamment destiné à insérer un zéro binaire (dit de bourrage) après chaque train de cinq un binaires consécutifs obtenus à la sortie du registre à décalage d'émission 32. Cette opération a pour but d'assurer la transparence du train de bits à transmettre, conformément aux règles de transmission de type synchrone du genre HDLC par exemple. Le circuit logique 34 insère aussi un drapeau HDLC d'un octet tous les 256 octets, de manière à permettre la synchronisation du système au niveau des octets transmis. L'insertion des zéros et du drapeau décroît le taux de bits utiles de 1 à 2% environ, ce qui est en pratique acceptable car les terminaux DTE 11 à 18, peuvent alors travailler à une cadence proche de leur cadence nominale de 1200 bps.

Le dispositif 50 d'insertion de zéros de bourrage a une entrée reliée à la sortie série du registre à décalage (SHX) 32 et une entrée d'inhibition INH3. Le circuit 50 comporte deux sorties, l'une fournissant le signal INH1 destiné au compteur 48, l'autre fournissant le train de bits TRDATA envoyés à l'entrée du modem 36. Le signal TC0 fourni par le compteur 48 est envoyé à l'une des entrées de deux portes ET désignées par A1 et A2. La deuxième entrée de A1 est portée au niveau logique 1 lorsque le registre-tampon BX contient le drapeau (Flag) ou plus précisément lorsqu'un signal logique BX = Flag est au niveau 1. Cette même indication est aussi envoyée à l'entrée du circuit A2 à travers un inverseur N1. Une troisième entrée du circuit A1 reçoit, à travers un inverseur N2, un signal indiquant que le compteur d'octet (compteur à huit étages binaires) 52 a atteint la valeur décimale 254. Ce compteur 52 a deux entrées, l'une recevant le signal TC1 directement, l'autre le recevant à travers une porte ET, A3 dont la seconde entrée est reliée à une sortie d'une bascule L1. La bascule L1 est commandée par les sorties des portes A1 et A2. La sortie de A3 sert à forcer le compteur 52 à la valeur décimale 255. La sortie "255" du compteur 52 est envoyée à l'entrée d'une porte A4 dont la seconde entrée est reliée à une sortie de la bascule L1. La sortie de la porte A4 fournit le signal d'horloge INH2. Le signal de la sortie "255" du compteur 52 est envoyé à l'entrée d'une porte ET A5 directement et à l'entrée d'une porte A6 à travers un inverseur N0. Les secondes entrées des portes A5 et A6 reçoivent le signal TC2 du compteur 48. Les sorties des portes A5 et A6 commandent une bascule L2 dont la sortie fournit le signal INH3. La sortie "255" du compteur 52 est aussi reliée directement à l'entrée d'une porte A7 et à travers un inverseur N4 à l'entrée d'une porte A8. Les secondes entrées des portes A7 et A8 reçoivent le signal TC2. Les sorties des portes A8 et A7 commandent respectivement, le transfert du contenu du registre tampon BX dans le registre à décalage SHX et l'introduction d'un drapeau dans SHX. Ces commandes sont respectivement désignées par "LOAD BX INTO SHX" et "LOAD FLAG INTO SHX".

En fonctionnement, lorsque le dispositif d'insertion de zéros 50 n'est pas inhibé par le signal INH3, il insère un "0" dans le train de bits reçu de SHX chaque fois que cinq "1" consécutifs y ont été détectés. Quant à l'insertion de l'octet drapeau, qui est ici égal à "7E" en héxadécimal, il est forcé dans le flot de données lorsque le contenu du compteur d'octet 52 atteint 255. L'insertion de zéro est naturellement inhibée durant l'envoi du drapeau. En fait, l'insertion du drapeau peut se faire dans deux conditions. La première, étant lorsque le compteur d'octets atteint 255 sans qu'un caractère de drapeau ne soit détecté dans le flot normal de données par un moyen non représenté du contenu du registre 30. Alors, un drapeau est inséré à la limite normale d'un octet. Un tel drapeau dit de synchronisation sera reconnu à la réception et soustrait du flot de données. La seconde situation se présente lorsqu'un caractére drapeau est détecté dans le flot de données, en d'autres termes, lorsque le registre BX contient un caractère drapeau. Dans ce cas ce drapeau dit de données est transmis sans insertion de zéro de bourrage, et contribue à la synchronisation de la réception de caractéres. Un tel drapeau, après avoir été reconnu à la réception n'est cependant pas extrait du flot de données.

Par conséquent, lorsqu'un drapeau est reconnu dans le registre BX (par un dispositif non représenté comparant chaque octet à transmettre au caractére "7E") le signal BX = Flag est porté au niveau logique 1. Le compteur d'octets 52 est alors forcé à 255, sauf si à l'étape précédente, il était à 254. Dans ce cas le drapeau fait partie des données à transmettre et INH2 = 0. Ceci permet d'éviter la confusion entre un drapeau de données et un drapeau de synchronisation. L'état du compteur d'octets à 255 entraîne le chargement du drapeau dans le registre SHX et l'inhibition de l'insertion de zéro. Lorsque le contenu du registre BX n'est pas un drapeau (signal indicateur BX = Flag au niveau logique 0), l'horloge CK fournissant le signal TRCK est inhibée durant un cycle, pour permettre la transmission du drapeau.

En d'autres termes, lorsque le contenu du registre BX est un drapeau, un circuit à coïncidence (non représenté) fournit un signal BX = Flag au niveau logique 1. Les opérations qui se déroulent alors dépendent du contenu du compteur 52. Si celui-ci n'est pas à 255, c'est-à-dire si à la fin de l'étape précédente, c'est-à-dire à TC$\emptyset$ = 1, ce contenu n'était pas 254, les phénomènes suivants se produisent:

. la sortie du circuit ET A1 est au niveau logique 1 ce qui met la bascule L1 dans l'état 1,

. la sortie complémentaire de la bascule L1 étant à zéro, la sortie de A4 est à zéro, donc le signal d'inhibition INH2 = 0. Le signal TRCK passe donc à travers la porte 49,

. le compteur 52 est forcé sur 255 lorsque TC1 = 1, pour ouverture de la porte A3,

. l'état 255 du compteur 52 fait basculer L2 via A5 ce qui empêche l'insertion de zéro de bourrage durant la transmission du drapeau,

. lorsque TC2 = 1, un drapeau est chargé dans le registre (SHX)32 grâce au passage au niveau 1 du signal "load flag into SXH". En fait le drapeau utilisé est celui emmagasiné dans un circuit non représenté au lieu de celui qui est dans le registre BX.

Lorsqu'à l'instant défini par TC1 le compteur 52 passe en 255, on obtient la situation suivante:

. la bascule L1 ne peut être mise sur 1 à TC$\emptyset$ car le compteur est à 254 (il avance à TC1),

. l'horloge TRCK est inhibée à travers la porte A4,

. un drapeau est chargé dans le registre SHX 32, à TC2, grâce au passage du signal "Load Flag into SHX" au niveau logique 1 par ouverture de la porte A7,

. l'insertion de zéros de bourrage est alors inhibée par la bascule L2.

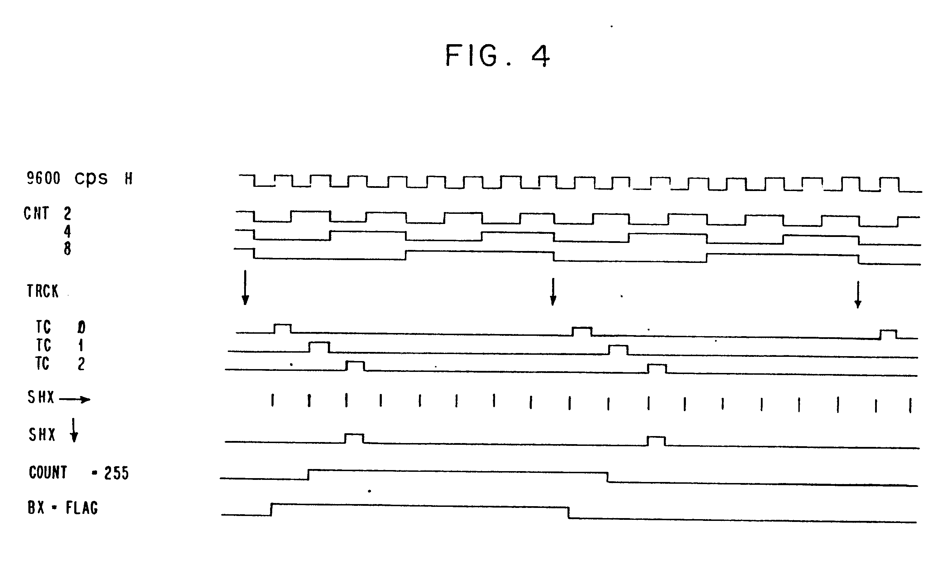

Le diagramme du fonctionnement des dispositifs d'émission décrits ci-dessus est représenté sur la figure 4. La première ligne représente un signal horloge H à 9600 cycles par seconde. Ce signal est applique au compteur 48 qui après trois divisions par deux fournit des signaux à 1200 cycles par seconde (ligne 4 du diagramme). La cinquième ligne représente le signal TRCK qui commande l'envoi d'un bit de chaque terminal 11 à 18 vers le registre tampon (BX) 30. Les lignes 6, 7 et 8 représentent les signaux TC$\emptyset$, TC1 et TC2 résultant du décodage des états 0, 1 et 2 du compteur 48.

La ligne 9 (SHX→) indique les instants où le contenu du registre SHX est décalé d'une position de bit.

La ligne 10 (SHX ↓) indique les instants où le registre (SHX) 32 est chargé.

La ligne 11 est au niveau haut durant le 255$^{\text{ième}}$ octet déterminé par le compteur 52.

La ligne 12 est au niveau haut lorsque le registre tampon (BX) 30 contient un octet identique au drapeau "7E"; c'est-à-dire que BX = Flag.

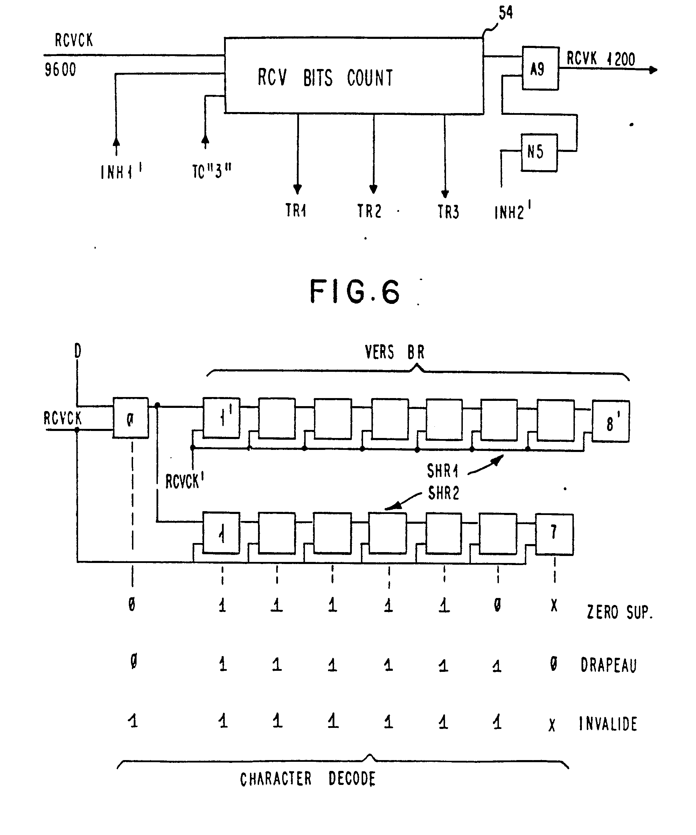

On a représenté sur la figure 5 un schéma de principe de l'horloge de réception 42. Cette horloge semblable à l'horloge émission comprend un compteur binaire (RCV BITS COUNT) 54 à trois étages commandé par le signal d'horloge interne de réception RCVCK à 9600 cycles par seconde. L'avancement de ce compteur peut être inhibé durant un cycle par un signal INH1' fourni par le circuit logique (D-SYNC) 40. La sortie du troisième étage du compteur fournit l'information horloge externe RCVK à 1200 cycles par seconde permettant aux terminaux DTE11' à DTE18' de recevoir les bits du registre-tampon de réception (BR) 46. Donc, lorsque le contenu du compteur 54 décroit de 7 à zéro, chaque terminal reçoit un bit de données emmagasiné dans une position de bit du registre 46. La sortie à 1200 cycles/ seconde du compteur 54 est transmise à travers une porte A9 dont l'ouverture est commandé par un circuit d'inhibition d'horloge INH2" inversé en N5.

Les états 1, 2 et 3 du compteur 54 sont décodés et transmis aux sorties TR1, TR2 et TR3 respectivement.

Une entrée "to 3" permet de forcer le contenu du compteur de bits 54 à la valeur décimale 3.

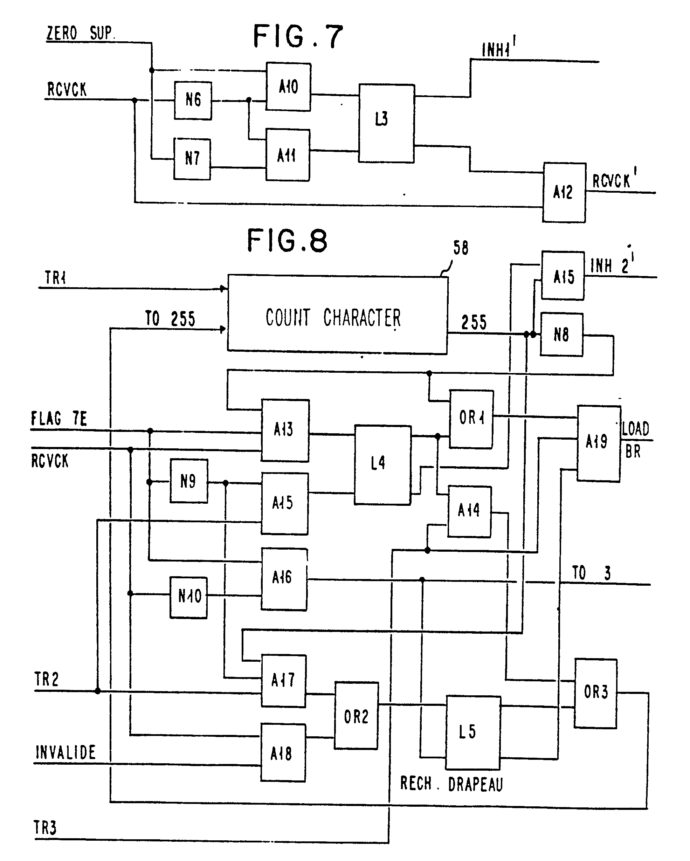

La figure 6 représente un mode de réalisation du registre à décalage (SHR) 44. Ce registre comporte en fait deux registres (SHR1 et SHR2) en parallèle avec un premier étage commun et une logique (non représentée) de décodage de caractère permettant d'identifier le contenu du registre SHR2 comme on le verra plus loin. Le premier étage reçoit les données (D) à 9600 bps, données extraites du train de bits RCVDATA par le circuit logique 40. Le signal horloge (RCVCK) est fourni par le modem 38. Le signal horloge RCVCK' utilisé pour commander les autres étages est semblable au signal RCVCK, mais il peut être inhibé durant un cycle horloge par le circuit logique (D-SYNC) 40 de manière à permettre la réalisation de l'opération dite de suppression de zéro. Cette opération est destinée à supprimer les zéros de bourrage. Comme le montre le tableau de combinaisons binaires représenté sur la figure 6, un simple décodage du contenu du registre SHR2 et de l'étage commun aux deux registres composant SHR permet de déceler certaines conditions. Ce décodage se fait à l'aide d'un dispositif à coincidence, de type classique, non représenté. Le décodage du contenu des étages 0 à 7 permet de détecter la réception d'un caractère de "drapeau" (ou Flag ayant la valeur 7E en héxadécimal) ou d'un caractère invalide. Le décodage du contenu des étages 0-6 signale les zéros dit de bourrage (0111110) qui devront être supprimés des données reçues. Ces informations sont utilisées par le circuit logique 40 dont un mode de réalisation est représenté sur les figures 7 et 8.

On a représenté sur la figure 7 une partie des circuits du dispositif logique (D-SYNC) 40. Ce circuit comprend deux inverseurs N6 et N7. L'inverseur N7 reçoit l'information "zéro SUP" (voir figure 6) indiquant la présence de zéros de bourrage à supprimer. L'inverseur N6 reçoit l'information d'horloge interne de réception à 9600 cycles/seconde RCVCK. La sortie de N6 attaque deux circuits logiques ET (portes), A10 et A11. La seconde entrée de A10 reçoit aussi l'information de suppression de zéro "zéro SUP". La seconde entrée de A11 est connectée à la sortie de N7. Les sorties de A10 et A11 attaquent une bascule L3. La sortie normale de L3 fournit le signal d'inhibition de cycle INH1'. La sortie inverse de L3 est connectée à l'une des entrées d'un circuit logique ET, A12 dont la seconde entrée reçoit le signal d'horloge à 9600 cycles par seconde RCVCK. La sortie de A12 fournit le signal RCVCK'.

Le dispositif de la figure 8 constitue la seconde partie du circuit logique (D-SYNC) 40. Le signal TR1 fourni par le compteur 54 est appliqué à l'entrée du compteur de caractères (octets) 58 comportant huit étages binaires, donc comptant de zéro à 255. La sortie du compteur indiquant que le contenu de celui-ci a atteint 255 est inversée en N8. La sortie de N8 attaque à la fois un circuit ET logique A13 et un circuit OU logique OR1. La deuxième entrée de A13 reçoit du dispositif de la figure 6 l'indication dite de présence (ou de réception) de drapeau (Flag 7E). A13 est aussi pourvu d'une troisième entrée recevant le signal RCVCK. La sortie de A13 attaque une bascule L4 dont la sortie normale est reliée à la fois au circuit OR1 et à un circuit ET, A14. La sortie inverse de la bascule L4 est reliée à l'entrée d'un circuit ET, A15 dont la seconde entrée est reliée à la sortie 255 du compteur 58. La sortie du circuit A15 fournit le signal d'inhibition d'horloge INH2'. L'indication de présence de drapeau (voir figure 6) est aussi appliqué à deux circuits ET, A15 et A16 (à travers un inverseur N9 pour ce qui est de A15). La sortie de A15 est reliée à l'entrée de la bascule L4. La sortie de l'inverseur N9 est reliée à l'une des entrées d'un circuit ET, A17, pourvu de deux autres entrées recevant respectivement le signal indiquant que le compteur 58 a atteint le chiffre 255 et le signal TR2 (voir figure 5). Ce même signal TR2 est aussi appliqué au circuit A15. La sortie du circuit A17 est reliée à l'une des entrées d'un circuit OU, OR2 dont la seconde entrée est reliée à la sortie d'un circuit ET, A18. Les entrées de A18 reçoivent l'une le signal RCVCK, l'autre l'indication "INVALIDE" (voir figure 6). Le signal RCVCK est aussi appliqué à l'entrée de A16 à travers un inverseur N10. La sortie "to 3" de A16 sert à forcer le contenu du compteur de bits 54 à trois. Le signal TR3 fourni par ce même compteur est envoyé simultanément à l'entrée du circuit A14 et à l'entrée d'un autre circuit ET logique A19. Le circuit A19 reçoit aussi le signal sortant de OR1 et le signal complément (inverse) sortant d'une bascule L5 dite de recherche de drapeau. Les entrées de L5 sont reliées aux sorties de A16 et OR2. La sortie normale de L5 est reliée à l'entrée d'un circuit OU logique OR3 dont la seconde entrée est reliée à la sortie de A14. La sortie de OR3 sert à forcer le compteur 58 à la valeur 255. La sortie du circuit A19 fournit l'information LOAD BR servant à commander le transfert du contenu du registre (SHR) 44 dans le registre (BR) 46 en commandant l'ouverture des portes G'1 à G'8 (voir figure 1).

On peut dire que le circuit (D-SYNC) 40 a trois fonctions essentielles à savoir:

. suppression des zéros de bourrage: lorsque cinq 1 consécutifs sont détectés dans le flot de bits reçu, le zéro qui suit est supprimé. A cet effet, le signal horloge des étages 1' à 8' du registre SHR1 est inhibé durant un cycle. Cette fonction inhibe aussi les détections drapeau et de caractère invalide durant le cycle bit suivant;

. détection de drapeau: lorsque la présence d'un drapeau est détectée dans le flot de bits reçus, l'une des deux décisions suivantes est prise:

. si le contenu du compteur de caractères 58 est égal à 255, le drapeau reçu est un caractère de synchronisation. Il est extrait du flot de données reçu en inhibant la fonction dite LOAD BR ainsi que le signal horloge externe à 1200 cycles/seconde (RCVK 1200 bps) commandant les terminaux DTE11' à 18';

. si le contenu du compteur de caractères est différent de 255, le drapeau reçu fait partie du flot de données reçues et destinées aux terminaux. Ce signal force le compteur de caractères à 255 et le compteur de bits à trois, au cas où il n'y serait pas déjà. Ceci permet une récupération de la synchronisation de caractères en cas de perte de celle-ci depuis le dernier bloc de 256 caractères;

. recherche de drapeau: la commande du circuit logique 40 se met en recherche de drapeau à l'instant d'initialisation de la réception ou après une pause ou une détection de perte de synchronisation. Dans cet état, aucune donnée n'est délivrée au terminaux, jusqu'à ce qu'un drapeau soit détecté pour resynchroniser à la fois les compteurs de caractères 58 et de bits 54.

La recherche de drapeau se fait plus précisément dans les cas suivants: remise sous tension de l'installation de réception; indication par le compteur de caractères d'une réception de plus de 256 caractères sans drapeau; ou, détection d'une configuration invalide de bits dans le flot de données reçu.

En d'autres termes, selon que le contenu du compteur 58 est ou n'est pas à 255 et selon le niveau logique du signal dit "Flag 7E" ou "DRAPEAU", les circuits de réception peuvent se trouver dans l'une des situations suivantes:

. le compteur 58 n'est pas à 255 et le signal DRAPEAU (Flag 7E) est au niveau logique 1:

la bascule L4 passe à l'état 1, c'est-à-dire celui où la borne de sortie supérieure (voir figure 8) est au niveau logique 1,

le compteur 58 est forcé à 255 au temps défini par TR3 grâce aux circuits A15 et OR3,

le registre BR est chargé normalement grâce à OR1 et A19,

enfin, le compteur 54 est forcé à 3 au cas où il n'y serait pas,

. le compteur 58 est à 255 et le signal DRAPEAU (Flag 7E) est au niveau logique 1:

le circuit A13 maintient la bascule L4 à zéro,

le circuit A19 fournit un signal "LOAD BR" au niveau logique zéro,

le signal RCVCK est inhibé par INH2',

. le compteur 58 est à 255 et le signal DRAPEAU (Flag 7E) est au niveau logique zéro ou bien le signal "Invalide" est au niveau 1,

en TR2, la bascule L5 est mise à l'état 1,

les signaux "Load BR" et RCVCK restant inhibés INH2' = 1. Le compteur 58 reste à 255 (par OR3). Les circuits de réception restent en recherche de synchronisation jusqu'à ce que le signal DRAPEAU passe au niveau 1 et remette la bascule L5 à zéro (à travers A16). Ce même signal remet le compteur 54 en position 3.

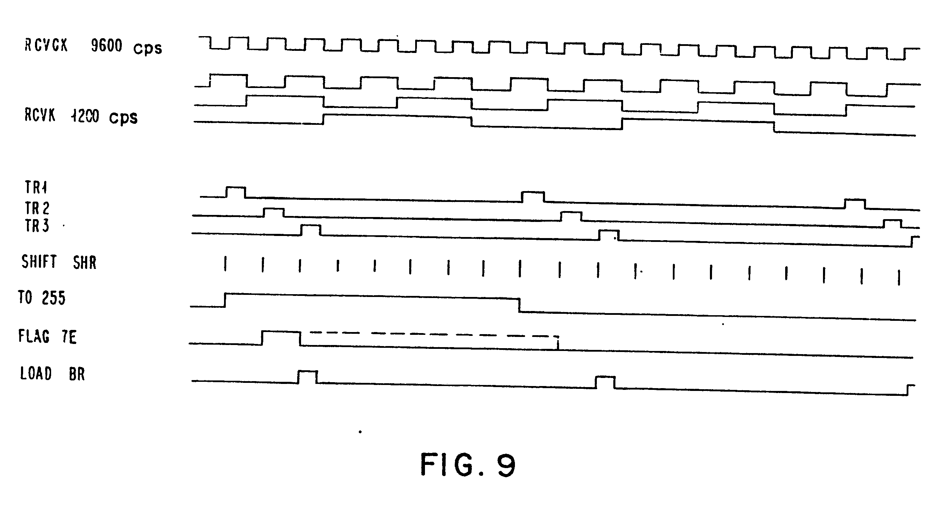

On a représenté sur la figure 9 un diagramme des temps des opérations de réception. La première ligne représente le signal horloge interne de réception RCVCK à 9600 cycles/ seconde fourni par le modem 38 La fréquence de ce signal est divisée par huit pour fournir le signal d'horloge externe RCVK 1200 cps (voir figure 1) commandant les transferts de bits reçus vers les terminaux DTE11' à 18'. Le compteur 54 fournit les trois signaux suivants (TR1, TR2, TR3) Le circuit logique 40 déduit des signaux ci-dessus, une information SHIFT SHR commandant les décalages de bits au sein du registre (SHR) 44.

La ligne suivante montre un signal dit "to 255" utilisé pour forcer le contenu du compteur de caractères 58 à la valeur décimale 255.

Les deux dernières lignes représentent respectivement le signal dit Flag 7E ou DRAPEAU et le signal dit LOAD BR.

**Revendications**

1. Dispositif de transmission de données utilisant un canal à haute vitesse desservant des terminaux basses vitesses (11 à 18 et 11' à 18') à travers un modem (36, 38) comportant une partie émission et une partie réception, ledit dispositif comportant:

à l'émission:

. des moyens d'horloge d'émission (28);

. un registre tampon d'émission (30) dont les positions de bits sont respectivement reliées aux terminaux (11 à 18);

. un registre à décalage d'émission (32) relié au registre tampon d'émission (30) et destiné à sérialiser les bits du registre tampon d'émission; et

. un circuit logique de mise en format d'émission (34) relié auxdits moyens d'horloge (28) et audit registre à décalage d'émission (32), ledit circuit logique (34) commandant le transfert du contenu du registre tampon d'émission (30) dans le registre à décalage d'émission (32) et fournissant à l'émetteur du modem (36) un train de bits à transmettre;

à la réception:

. un circuit logique (40) de remise en format recevant les bits de données du récepteur du modem (38);

. un registre à décalage de désérialisation de réception (44) destiné à recevoir les données reçues remises en format par ledit circuit logique (40);

. un registre tampon de réception (46) relié audit registre de désérialisation de réception (44) et aux terminaux basses vitesses (11' à 18'); et

. des moyens horloge (42) de réception;

ledit dispositif de transmission des données étant caractérisé en ce que lesdits moyens d'horloge d'émission (28) et de réception (42) reçoivent du modem (36, 38) un signal d'horloge interne et engendrent respectivement des signaux d'horloge externe d'émission et de réception contrôlant les transferts de bits en provenance de ou dirigés vers les terminaux.

2. Dispositif de transmission de données selon la revendication 1 caractérisé en ce que lesdits moyens d'horloge d'émission engendrent le signal d'horloge externe d'émission (28) par division du signal d'horloge interne fourni par l'émetteur du modem (36) par un coefficient égal au rapport entre lesdites vitesses haute et basse.

3. Dispositif de transmission de données selon la revendication 2, caractérisé en ce que lesdits moyens d'horloge de réception (42) engendrent le signal d'horloge externe de réception par division du signal dit d'horloge interne de réception déduit du signal reçu par le modem (38), par un coefficient égal au rapport entre lesdites vitesses haute et basse.

4. Dispositif de transmission de données selon l'une des revendications 1 à 3 caractérisé en ce que le circuit logique de mise en format d'émission (34) comporte:

des moyens insérant des bits dits de bourrage dans le train de bits sortant du registre à décalage d'émission; etc, des moyens d'insertion de caractères insérant des caractères dits de drapeau dans le train de bits issus du registre à décalage d'émission.

5. Dispositif de transmission de données selon la revendication 4 caractérisé en outre en ce que ladite insertion de caractères de drapeau n'est réalisée qu'en l'absence d'un caractère de drapeau déjà inclu dans le train de bits issu du registre à décalage d'émission (32).

6. Dispositif de transmission de données selon la revendication 5 caractérisé en ce qu'il comporte en outre des moyens permettant d'empêcher les insertions de bits de bourrage dans des caractères de drapeau.

7. Dispositif de transmission de données selon l'une des revendications 1 à 6 caractérisé en ce que ledit registre à décalage de réception (44) comporte deux registres en parallèle, et des moyens permettant de décoder le contenu de l'un desdits registres en parallèle pour y déceler une configuration de bits donnée.


**Patentansprüche**

1. Datenübertragungsvorrichtung, die einen Kanal mit hoher Geschwindigkeit verwendet, der Terminals mit niedrigen Geschwindigkeiten versorgt (11 - 18 und 11' - 18'), über ein Modem (36-38), das einen Sende- und einen Empfangsteil enthält, wobei die besagte Vorrichtung umfasst:

sendeseitig:

. Sendetaktgebermittel (28);

. ein Sende-Pufferregister (30), dessen Bitpositionen mit je einem der Terminals (11 bis 18) verbunden sind

. ein Sende-Verschiebungsregister (32), das mit dem Sende-Pufferregister (30) verbunden ist und das die Aufgabe hat, die Rits des Sende-Pufferregisters in Serie zu bringen ; und

. eine logische Schaltung, die das Sendeformat (34) erzeugt, in Verbindung mit den besagten Taktgebermitteln (28) und dem besagten Verschiebungsregister (32) den Transfer des Inhalts des Pufferregisters (30) in das Sende-Verschiebungsregister (32) steuert und an den Modemsender (36) eine zu übertragende Bitfolge liefert ;

empfangsseitig:

. eine logische Schaltung (40) für die Formatierung, die die Datenbits vom Modememfänger (38) aufnimmt;

. ein Verschiebungsregister für die Entserialisierung beim Empfang (44), dafür bestimmt, die von der besagten logischen Schaltung (40) empfangenen und formatierten Daten zu empfangen;

. ein Empfangs-Pufferregister (46), mit dem Empfangs-Entserialisierungsregister (44) und mit den Terminals für niedrige Geschwindigkeiten (11' - 18') verbunden ; und

. Empfangs-Taktmittel (42);

wobei besagte Datenübertragungsvorrichtung dadurch gekennzeichnet ist, dass die besagten Sende- (28) und Empfangstaktmittel (42) vom Modem (36, 38) ein internes Taktsignal empfangen und jeweils externe Sende- und Empfangstaktsignale erzeugen, die den Transfer von Bits von und zu den Terminals steuern.

2. Datenübertragungsvorrichtung gemäss Anspruch 1, dadurch gekennzeichnet, dass die besagten Sendetaktmittel (28) das externe Sendetaktsignal durch Teilung des internen Taktsignals erzeugen, das vom Modemsender (36) gestellt wird, durch einen Beiwert, der dem Verhältnis zwischen der besagten hohen und niedrigen Geschwindigkeit entspricht.

3. Datenübertragungsvorrichtung gemäss Anspruch 2, dadurch gekennzeichnet, dass die besagten Empfangstaktsignalmittel (42) das externe Empfangstaktsignal erzeugen, durch Teilung des internen Empfangstaktsignals, das von dem vom Modem (38) empfangenen Signal abgeleitet wird, durch einen Beiwert, der dem Verhältnis zwischen der besagten hohen und niedrigen Geschwindigkeit entspricht.

4. Datenübertragungsvorrichtung gemäss einem der Ansprüche 1 bis 3, dadurch gekennzeichnet, dass die logische Schaltung für die Sendeformatierung enthält:

Mittel zum Einsetzen von sogenannten Füllbits in die Bitfolge aus dem Sende-Verschiebungsregister usw., Mittel zum Einsetzen von Zeichen, die sogenannte Flag-Zeichen in die Ritfolge aus dem Sende-Verschiebungsregister einfügen.

5. Datenübertragungsvorrichtung gemäss Anspruch 4, ferner dadurch gekennzeichnet, dass die besagte Einfügung von Flag-Zeichen nur erfolgt, wenn in der Bitfolge aus dem Sende-Verschiebungsregister (32) nicht bereits ein Flagzeichen enthalten ist.

6. Datenübertragungsvorrichtung gemäss Anspruch 5, dadurch gekennzeichnet, dass es ausserdem Mittel enthält, mit denen sich das Einfügen von Füllbits in Flagzeichen verhindern lässt.

7. Datenübertragungsvorrichtung gemäss einem der Ansprüche 1 bis 6, dadurch gekennzeichnet, dass das besagte Empfangs-Verschiebungsregister (44) zwei parallele Register enthält, und Mittel, mit denen sich der Inhalt eines der besagten Parallelregister dekodieren lässt, um eine gegebene Bitanordnung darin zu erkennen.

## Claims

1. A data transmission system comprising a high-speed channel linking low-speed terminals (11-18 and 11'-18') through a modem (36, 38) having a transmit portion and a receive portion, said system including:.

at the transmitting end:
- transmit clock means (28),
- a transmit buffer register (30) the individual bit positions of which are repectively connected to said terminals (11-18),
- a transmit shift register (32) connected to said buffer register (30) for serializing the bits thereof, and
- a transmit formatting logic circuit (34) connected to said clock means (28) and to said shift register (32), said logic circuit (34) controlling the transfer of the contents of said buffer register (30) to said shift register (32) and supplying the transmit portion of said modem (36) with a train of bits to be tramsmitted;

at the receiving end:
- a reformatting logic circuit (40) that receives the data bits from the receive portion of said modem (38),
- a receive deserializing shift register (44) that receives the data reformatted by said logic circuit (40),
- a receive buffer register (46) connected to said deserializing shift register (44) amd to said low-speed terminals (11'-18'), and
- receive clock means (42);

said data transmissiom system being characterized in that said transmit clock means (28) and said receive clock means (42) receive from said modem (36, 38) an internal clock signal and generate, respectively, external tramsmit clock signals and external receive clock signals that control bit transfers from or to said termimals.

2. A data transmission system according to claim 1, characterized in that said transmit clock means (28) generate said external transmit clock signal by dividing said internal clock signal supplied by the transmitting portion of said modem (36) by a coefficient equal to the ratio of said high speed to said low speed.

3. A data transmission system according to claim 2, characterized in that said receive clock meams (42) generate said external receive clock signal by dividing said internal receive clock signal derived from the signal received from said modem (38) by a coefficient equal to the ratio of said high speed to said low speed.

4. A data transmission system according to any one of claims 1 to 3, characterized in that said transmit formatting logic circuit (34) includes:

means for inserting stuffing bits into the serialized train of bits leaving said transmit shift register, and

means for inserting flag characters into the train of bits provided by said transmit shift register.

5. A data transmission system according to claim 4, further characterized in that the insertion of said flag characters takes place only if no flag character is already included in the train of bits provided by said transmit shift register (32).

6. A data transmission system according to claim 5, characterized in that it further includes means for preventing the insertion of stuffing bits into flag characters.

7. A data transmission system according to any one of claims 1 to 6, characterized in that said receive shift register (44) includes two parallel registers and means for decoding the contents of either of said parallel registers to detect a given bit configuration.

FIG. 1

0 104 294

# FIG.2

H  DU  MODEM  36 → [ **CNT** ] 48 → [ **A** ] 49 → TRCK

INH 1 ↑    ↓ TCØ    ↓ TC4    ↓ TC2    [ **N3** ] ↑ INH2

# FIG.3 .

DE SHX → [ **ZERO** ] 50 → INH 1

INH 3 → TRDATA

TCØ

BX - FLAG

[ **N2** ] [ **N1** ] [ **A1** ] [ **A2** ] [ **L1** ]

TC 2 → [ **A5** ] [ **A6** ] [ **L2** ]

[ **NO** ]

INH2

[ **A4** ]

TC 1 → [ **A3** ] SET TO 255 → [ **COUNT** ] 52    254

TC 1 →    255

TC2 → [ **A7** ] LOAD FLAG INTO SHX

[ **N4** ] [ **A8** ] LOAD BX INTO SHX

3

# FIG. 4

9600 cps H

CNT 2
4
8

TRCK

TC 0
TC 1
TC 2

SHX →

SHX ↓

COUNT = 255

BX = FLAG

0 104 294

RCVCK
9600

RCV BITS COUNT

54

A9 → RCVK 1200

N5

INH1'

TC"3"

TR1     TR2     TR3     INH2'

# FIG.6

D

VERS BR

RCVCK

Ø     1'                    8'

RCVCK'

SHR1
SHR2

1                     7

Ø     1     1     1     1     1     Ø     X     ZERO SUP.

Ø     1     1     1     1     1     1     Ø     DRAPEAU

1     1     1     1     1     1     1     X     INVALIDE

CHARACTER DECODE

# FIG.7

ZERO SUP.

RCVCK

N6

N7

A10

A11

L3

INH1'

A12  RCVCK'

# FIG.8

TR1

TO 255

COUNT CHARACTER

58

255

A15  INH 2'

N8

FLAG 7E

RCVCK

A13

N9

A15

N10

A16

L4

OR1

A14

A19  LOAD BR

TO  3

TR2

A17

OR2

A18

INVALIDE

L5

OR3

RECH. DRAPEAU

TR3

FIG. 9

0 104 294